# EUROPEAN PATENT SPECIFICATION

(11) **EP 3 905 622 B1**
(45) Date of publication and mention of the grant of the patent: **23.04.2025**
(21) Application number: 19901939.9
(22) Date of filing: 19.12.2019
(51) Int. Cl.: H04L 9/40, H04L 41/12, H04L 41/142, H04L 43/04, H04L 43/065, H04L 43/0876, H04L 61/4511

(54) **BOTNET DETECTION METHOD AND SYSTEM, AND STORAGE MEDIUM**
VERFAHREN UND SYSTEM ZUR BOTNET-ERKENNUNG SOWIE SPEICHERMEDIUM
PROCÉDÉ ET SYSTÈME DE DÉTECTION DE RÉSEAU DE ZOMBIES, ET SUPPORT D'INFORMATIONS

(30) Priority: 26.12.2018 CN 201811602973
(43) Date of publication of application: 03.11.2021
(73) Proprietor: ZTE Corporation, Shenzhen, Guangdong 518057 (CN)
(72) Inventor: CHENG, Li, Shenzhen, Guangdong 518057 (CN); TIAN, Tian, Shenzhen, Guangdong 518057 (CN); LI, Yixin, Shenzhen, Guangdong 518057 (CN); LUO, Xi, Shenzhen, Guangdong 518057 (CN); YANG, Jing, Shenzhen, Guangdong 518057 (CN); WANG, Liming, Shenzhen, Guangdong 518057 (CN)
(74) Representative: Boult Wade Tennant LLP
(86) International application number: PCT/CN2019/126754
(87) International publication number: WO 2020/135233

(56) References cited:
- CN-A- 103 491 074
- CN-A- 106 060 067
- CN-A- 107 249 049
- US-A1- 2015 281 259
- NAN JIANG ET AL: "Identifying suspicious activities through DNS failure graph analysis", NETWORK PROTOCOLS (ICNP), 2010 18TH IEEE INTERNATIONAL CONFERENCE ON, IEEE, 5 October 2010 (2010-10-05), pages 144 - 153, XP031864723, ISBN: 978-1-4244-8644-1, DOI: 10.1109/ICNP.2010.5762763
- ARIAN BAR ET AL: "Trapping botnets by DNS failure graphs: Validation, extension and application to a 3G network", COMPUTER COMMUNICATIONS WORKSHOPS (INFOCOM WKSHPS), 2013 IEEE CONFERENCE ON, IEEE, 14 April 2013 (2013-04-14), pages 393 - 398, XP032436417, ISBN: 978-1-4799-0055-8, DOI: 10.1109/INFCOMW.2013.6562863

## Description

### Field of the Invention

The present disclosure relates to the field of network security, and in particular to a botnet detection method and system, as well as a storage medium for the same.

### Background of the Invention

Botnet refers to a network which may cause a large number of hosts to be infected by a bot through one or more transmission routes, thereby forming a point-to-multipoint command and control (C&C) between a controller and the infected hosts. Attackers spread bots to infect a number of hosts all over the Internet through various channels, and the infected hosts receive instructions from the attackers through one control channel, resulting in a botnet. Upon such attack trick, the attackers are provided with a hidden, flexible and efficient point-to-multipoint command and control mechanism, as a result of which the attackers can commit offenses such as surreptitiously acquisition of information, distributed denial of service, and spam sending, resulting in a serious threaten in the present network security field.

At present, the most popular method for detecting botnets may be implemented through network traffic analysis, i.e., clustering or correlation detection of network data traffic. This kind of methods commonly perform clustering analysis onto characteristic information, such as source IP address, destination IP address, data packet size, port number, protocol, etc. contained in data stream information of multiple network devices, such as switches, gateway devices that are widely distributed in a monitored network so as to discover abnormal behaviors of network traffic belonging to the botnet, or alternatively, perform correlation analysis based on known botnet behaviors to identify abnormal traffic from the network traffic so as to achieve detection of botnet. However, those methods require a wide variety of data information, a huge data stream, and have to parse data packets to extract multiple characteristics. Thus, the processing load is too large, resulting in a relatively low efficiency of botnet detection.

Document by Nan Jing et al., titled "Identifying suspicious activities through DNS failure graph analysis", Network Protocols (ICNP), 2010 18th IEEE International Conference On, 5 October 2010, pages 144-153, XP031864723, proposes a lightweight anomaly detection approach based on unproductive DNS traffic, namely, the failed DNS queries, with a novel tool-DNS failure graphs. A DNS failure graph captures the interactions between hosts and failed domain names. A graph decomposition algorithm based on the tri-nonnegative matrix factorization technique is applied to iteratively extract coherent co-clusters (dense subgraphs) from DNS failure graphs. By analyzing the co-cluster in the daily DNS failure graphs from a 3-month DNS trace captured at a large campus network, these co-clusters are found to represent a variety of anomalous activities, e.g., spamming, Trojans, bots, etc.. In addition, these activities often exhibit distinguishable subgraph structures. By exploring the temporal properties of the co-clusters, the method can identify new anomalies that likely correspond to unreported domain-flux bots.

Document by Arian Bar et al., titled " Trapping botnets by DNS failure graphs: Validation, extension and application to a 3G network", computer Communications Workshop (INFOCOM WKSHPS), 2013 IEEE Conference On, 14 April 2013, pages 393-398, XP032436417, validates the Domain Name System (DNS) failure graph approach presented earlier in Identifying suspicious activities through DNS failure graph analysis (Nan Jiang, Jin Cao, Yu Jin, L.E., and Zhi-Li Zhang, in Network Protocols (ICNP), 2010 18th IEEE International Conference on, pages 144-153, October 2010). This approach is applied to in an operational 3G mobile network serving a significantly large user population. Based on the introduction of stable host identifiers a novel approach is implemented to the tracking of botnets over a period of several weeks. The results reveal the presence of several groups of hosts that are members of botnets. The host groups exhibiting the most suspicious behavior are analyzed and how these participate in botnets and other malicious activities are elaborated. In addition, how the accuracy of the detection approach could be improved in the future by correlating the knowledge obtained from applying the method in different network is discussed.

### Summary of the Invention

The present invention relates to a botnet detection method, a botnet detection system, and a storage medium, as defined in the annexed claims, so that an improvement in the detection efficiency of botnets is realized.

To achieve the objective, according to an embodiment of the present disclosure, it is provided a botnet detection method applied to a botnet detection system, the method including steps of: acquiring original network traffic data in a monitored network, and preprocessing the original network traffic data to obtain preprocessed network traffic data; constructing a terminal access relationship graph based on the preprocessed network traffic data; and mining a list of identifiers of terminals accessing a plurality of identical domain names from the terminal access relationship graph to obtain a combination of candidate nodes, and screening the combination of candidate nodes based on a preset screening rule to obtain a detection result of botnet nodes.

According to a further embodiment of the present disclosure, it is also provided a botnet detection system, including: a data preprocessing module configured to acquire original network traffic data in a monitored network, and preprocess the original network traffic data to obtain preprocessed network traffic data; a relationship graph construction module configured to construct a terminal access relationship graph based on the preprocessed network traffic data; and a node judgment module configured to mine a list of identifiers of terminals accessing a plurality of identical domain names from the terminal access relationship graph to obtain a combination of candidate nodes, and screen the combination of candidate nodes based on a preset screening rule to obtain a detection result of botnet nodes.

According to a still further embodiment of the present disclosure, it is also provided a network access system, including a botnet detection system, and a malicious domain name detection system, a monitoring system and a DNS server, each of which is communicatively connected to the botnet detection system. The botnet detection system is further connected to a number of access terminals. The botnet detection system is configured to serve as the botnet detection system described above. The DNS server is configured to provide domain name access services to the access terminals. The malicious domain name detection system is configured to receive suspicious domain names in a detection result sent by the botnet detection system, and evaluate the suspicious domain names to optimize the detection result. The monitoring system is configured to receive the detection result reported by the botnet detection system to display the detection result, and/or perform, according to the detection result, corresponding management and control operations onto terminals suspected of being infected with a bot virus.

According to a yet further embodiment of the present disclosure, it is also provided a botnet detection system, including: a memory, a processor, and a botnet detection program stored on the memory and executable on the processor. The botnet detection program may, when executed by the processor, implement steps of any one of the botnet detection methods as described.

According to a yet still further embodiment of the present disclosure, it is also provided a computer-readable storage medium storing thereon a botnet detection program. The botnet detection program may, when executed by a processor, may implement steps of any one of the botnet detection methods as described.

### Brief Description of the Drawings

Fig. 1 is an architecture diagram of a network access system according to an embodiment of the present disclosure;
Fig. 2 is a schematic flowchart of a botnet detection method according to a first embodiment of the present disclosure;
Fig. 3(a) is diagram showing an exemplary process of a relationship graph construction module in a botnet detection system according to an embodiment of the present disclosure;
Fig. 3(b) is diagram showing another exemplary process of a relationship graph construction module in a botnet detection system according to an embodiment of the present disclosure;
Fig. 4 is diagram showing an exemplary process of a node judgment module in a botnet detection system according to an embodiment of the present disclosure;
Fig. 5 is a schematic diagram illustrating a process of constructing a pattern tree according to an embodiment of the present disclosure;
Fig. 6 is a schematic flowchart illustrating a botnet detection method according to a second embodiment of the present disclosure;
Fig. 7 is a schematic flowchart illustrating a botnet detection method according to a third embodiment of the present disclosure; and
Fig. 8 is a schematic diagram illustrating a system architecture in an operating environment according to an embodiment of the present disclosure.

With reference to accompanying drawings, further implementation, functional features and advantages of the present disclosure will be described in detail below in conjunction with the embodiments.

The solutions of the disclosure will become apparent and more comprehensible from the following detailed description with reference to the drawings.

### Detailed Description of the Embodiments

It shall be appreciated that embodiments described herein are intended only to explain, rather than limit, the present disclosure. Obviously, the embodiments described below are merely part of the embodiments of the present disclosure. Based on the disclosed embodiments, other embodiments obtained by those of ordinary skill in the art without creative efforts shall fall within the scope of the present disclosure. As long as there is no conflict, the embodiments in the present disclosure as well as the features in the embodiments may be combined with one another in any manner. Although a logic sequence is illustrated in the flow diagram, in some cases, the steps illustrated or described can be performed in a sequence different from the sequence herein.

The concept introduced by the embodiments of the present disclosure lies in acquiring original network traffic data in a monitored network, and preprocessing the original network traffic data to obtain preprocessed network traffic data; constructing a terminal access relationship graph based on the preprocessed network traffic data; and mining a list of identifiers of terminals accessing a plurality of identical domain names from the terminal access relationship graph to obtain a combination of candidate nodes, and screening the combination of candidate nodes based on a preset screening rule to obtain a detection result of botnet nodes. Thereby, behavior patterns of the terminals may be analysed and compared depending on information about domain name queries or accesses in terminal network behaviors, and existence of any botnet may be detected and found based on a characteristic that botnet-controlled terminals generally have identical or similar behavior patterns, which can effectively improve detection efficiency. Besides, this solution does not require detection based on known botnet behavior characteristics, and therefore can be advantageously applied for detection of unknown botnet threats.

In certain cases, dominantly existing methods for detecting a botnet may perform clustering analysis onto characteristic information, such as source IP address, destination IP address, data packet size, port number, protocol, etc. contained in data stream information of multiple network devices, such as switches, gateway devices that are widely distributed in a monitored network so as to discover abnormal behaviors of network traffic belonging to the botnet, or alternatively, perform correlation analysis based on known botnet behaviors to identify abnormal traffic from the network traffic so as to achieve detection of botnet. However, those methods require a wide variety of data information, a huge data stream, and have to parse data packets to extract multiple characteristics. Thus, the processing load thereof is too large, resulting in a relatively low efficiency of botnet detection.

The present disclosure provides a technical solution that may need relatively few types of data and little characteristics extracted from data traffic, thereby reducing computational overhead, and effectively improving detection efficiency.

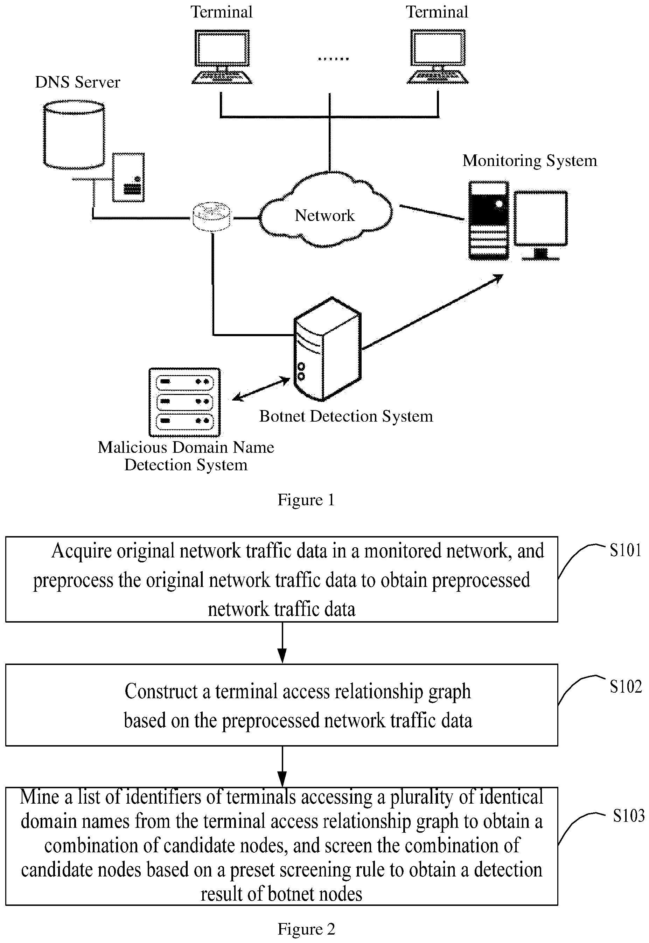

In one embodiment, referring to Fig. 1, shown is an architecture diagram of a network access system according to an embodiment of the present disclosure. In particular, Fig. 1 shows a schematic diagram of an application deployment of a botnet detection system according to the embodiment of the present disclosure.

As shown in Fig. 1, an embodiment of the present disclosure provides a network access system that includes a botnet detection system, and a malicious domain name detection system, a monitoring system and a DNS (Domain Name System) server which are communicatively connected to the botnet detection system, respectively. The botnet detection system is further connected with a number of access terminals. The botnet detection system herein right serves as the botnet detection system to be provided by embodiments of the present disclosure.

In the application deployment shown in Fig. 1, the botnet detection system is deployed in the network architecture via a bypass connection to acquired network traffic in a mirrored manner for detection and analysis.

In the embodiment of the present disclosure, the botnet detection system performs detection by acquiring, from network traffic data, terminal identifier information and domain name information that the terminals query or access. The system needs to extract terminal identifiers (for example, terminal IP address, terminal MAC address, or user identity information a host associated with a terminal, etc.) in the terminal identifier information and domain names accessed or inquired by the terminals. The mentioned network traffic data acquired by the system may include various forms, including but not limited to, for example, a domain name query request from a terminal, a HTTP connection request from a terminal to access a domain name, or the like.

In an implementation of the embodiment of the present disclosure, the deployment of the botnet detection system may be implemented in various ways. References may be made from the bypass deployment scheme in Fig. 1, or made by changing physical connection mode or modifying traffic routing rules as long as each access stream passes through the botnet detection system right before it reaches a terminal, a server, or the like.

In an implementation of the embodiment of the present disclosure, the botnet detection system may detect traffic logs within a time range, analyse behavior patterns of the terminals, and finally sort out all terminals having identical behavior patterns. The mentioned sorting out identical behavior patterns means that multiple terminals have completely consistent access or query behaviors toward multiple domain names within a set time interval or threshold.

In one embodiment, as that in an implementation of the embodiment of the present disclosure, the botnet detection system may send a suspicious domain name in detection result to the malicious domain name detection system so that the suspicious domain name can be further evaluated. Optionally, the malicious domain name detection system here may be implemented by various means, such as a malicious domain name blacklist filtering system, a threat intelligence matching detection system, an arbitrary domain name detection system, or the like. By means of the malicious domain name detection system, the botnet detection system may further rank the detection result in terms of threat levels so as to optimize the detection result. As an example, if the malicious domain name detection system judges a domain name accessed by a group of terminals to be a botnet domain name, it may determine that the group of terminals with identical behavior patterns is suspected to be controlled by a same kind of bot virus so that a topological relationship of the botnet can be obtained directly. In practical deployment, the botnet detection system may determine, according to actual conditions, whether this step is to be performed to further detect the domain name information.

Further, in an implementation of the embodiment of the present disclosure, the botnet detection system may further report the detection result to the monitoring system, on which the detection result may be displayed. In an expanded manner, the monitoring system may further perform corresponding management and control operations onto terminals suspected of being infected with the bot virus based on the detection result, for example, performing operations such as network speed limit onto terminals suspected of being infected with the bot virus.

It should be noted that the mentioned deployment scheme of the botnet detection system is merely a preferred example. In applications, the botnet detection system can be deployed depending on actual networking conditions.

In one embodiment, in addition to being deployed in the network to perform real-time traffic detection, the botnet detection system of the present disclosure may also be applicable to parse traffic log files and output a network behavior analysis and detection result.

In the mentioned system architecture as shown in Fig. 1, the DNS server is configured to provide domain name access service to an access terminal.

The malicious domain name detection system is configured to receive a suspicious domain name in the detection result sent by the botnet detection system, and to evaluate the suspicious domain name to optimize the detection result.

The monitoring system is configured to receive the detection result reported by the botnet detection system to display the detection result, and/or perform corresponding management and control operations onto terminals suspected of being infected with a bot virus according to the detection result.

The botnet detection system provided by the embodiment of the present disclosure will be described in detail with reference to the following embodiments.

The botnet detection system provided by the embodiment of the present disclosure may perform analysis and comparison on behavior patterns of the terminals depending on information about domain name queries or accesses in terminal network behaviors, and detect and find the existence of any botnet based on such a characteristic that botnet-controlled terminals generally have identical or similar behavior patterns. Compared with existing technologies, the disclosed solution needs relatively fewer types of data and less characteristics extracted from data traffic, thereby reducing computational overhead, and effectively improving detection efficiency. Besides, this solution does not require detection based on known botnet behavior characteristics, and therefore can be advantageously applied for detection of unknown botnet threats.

In one embodiment, as shown in Fig. 2, a first embodiment of the present disclosure provides a botnet detection method applied to a botnet detection system, which includes the following steps S101 to S 103.

At step S101, original network traffic data in a monitored network is acquired, and the original network traffic data is preprocessed to obtain preprocessed network traffic data.

In particular, the botnet detection system may acquire network traffic data by various manners, including but not limited to, for example, a domain name query request from a terminal, a HTTP connection request from a terminal to access a domain name, or the like.

In one embodiment, as an implementation, the step of acquiring the original network traffic data in the monitored network may include: acquiring, by the botnet detection system, real-time traffic data or traffic log files within a preset time range in the monitored network as the original network traffic data, the real-time traffic data or the traffic log files including at least domain name query requests from the terminals and/or HTTP connection requests from the terminals for accessing the domain names.

When the original network traffic data in the monitored network has been acquired, preprocessing is applied on the original network traffic data.

In particular, the preprocessing applied on the original network traffic data includes: extracting valid fields in the network traffic data, and performing data cleaning to remove redundant and duplicate information. A data preprocessing module may be provided to perform this step.

In one embodiment, the following schemes may be adopted to preprocess the original network traffic data.

Firstly, the original network traffic data is grouped by time intervals.

In particular, grouping by time intervals refers to pre-setting a time window T, and grouping traffic logs containing domain name information in a periodic manner with T as one period, so that all log data having a timestamp within T may serve as a set of data content to be processed in subsequent terminal identifier aggregation.

The reason for grouping by time intervals is that: under normal circumstances, controlled terminals infected with the same bot virus will exhibit a certain degree of consistency in their behavior patterns and thereby their traffic data follows certain periodic features, as a result of which locating of botnet behaviors will be more accurate as long as a setting of time interval is reasonable.

Then, valid fields are extracted from the network traffic data grouped by time intervals. The valid fields include at least three key fields of timestamp, terminal identifier, and access domain name.

In particular, the valid field extraction in this embodiment may be implemented by selecting and extracting three key fields in the log data, such as timestamp, terminal identifier, and access domain name.

The mentioned valid fields constitute a minimum set of fields required for detection, and none of them is dispensable. In practical applications, the extracted fields content include but are not limited to the above fields.

Finally, the network traffic data containing the valid fields are cleaned and redundant data and a whitelist are filtered to obtain log sequences each having a data structure of <timestamp, terminal identifier, access domain name>.

In one embodiment, as that in this embodiment, the process of data cleaning may include two steps, redundant data filtering and whitelist filtering.

In particular, redundant data filtering means that in one and the same time interval, if <terminal ID, access domain name> information for multiple logs is detected to be consistent during the log processing process, then duplicate records is removed but only one log will be kept within that same time interval.

Whitelist filtering means that an access domain name in the information of a log may be analysed, and if the domain name is a trusted domain name, then the log is removed without performing the subsequent detection process.

After the mentioned data cleaning processing, the data preprocessing module outputs log sequences each with a structure of <timestamp, terminal identifier, access domain name>.

At step S102, a terminal access relationship graph is constructed based on the preprocessed network traffic data.

In particular, the step of constructing the terminal access relationship graph may be performed by a relationship graph construction module. The construction of the terminal access relationship graph may include three operations: terminal identifier information aggregation, relationship graph construction, and relationship graph update.

In one embodiment, the step of constructing the terminal access relationship graph based on the preprocessed network traffic data may include the following steps.

Information about terminal identifiers identifying terminal information and domain names accessed or inquired by the terminals in terminal network behaviors within a corresponding time interval are extracted from the preprocessed network traffic data.

Based on the extracted information about terminal identifiers and domain names accessed or queried by the terminals, terminal identifier information within the same time interval is aggregated with respect to each domain name of interest to form an aggregation structure of <time identifier, domain name, terminal identifier set for accessing domain name>, respectively.

Based on the aggregation structure, an adjacency relationship graph between a node with the domain name of interest and a list of terminal identifiers that access the domain name is constructed and updated so as to obtain the terminal access relationship graph.

In particular, the aggregation of terminal identifier information refers to an aggregation operation that is exerted on data within a time interval. This operation uses an access domain name in the log information as a key value, and aggregates the identifier information of the terminals that initiate queries or accesses to this domain name. An aggregation result obtained is in a form of <time identifier, domain name, terminal identifier set>, where the time identifier is used to identify the time interval in which those access operations occur.

Hereafter the operation will be described in details by, for example, using IP addresses as the terminal identifiers.

The original network traffic data undergoes data preprocessing (such as time slice extraction, valid field extraction, data filtering) to obtain tuples of <timestamp, terminal IP address identifier, access domain name>.

Information of the preprocessed tuple is divided by time intervals, and the data aggregation operation is performed on log records within a time interval T1 to obtain tuples of <time identifier, access domain name, terminal IP address identifier set> as shown in Table 1 below.

**Table 1**

| Time identifier | Access domain name | Terminal IP address identifier |
|---|---|---|
| T1 | Domain 1 | IP-1, IP-2, IP-3 |
| T1 | Domain2 | IP-1, IP-2, IP-3, IP-4 |

Accordingly, based on the aggregated data within the time interval as listed, a relationship graph is constructed. The relationship graph uses <time identifier#domain name information> and <terminal identifier information> as nodes, respectively, and includes adjacency relationship between a terminal identifier and an accessed domain name.

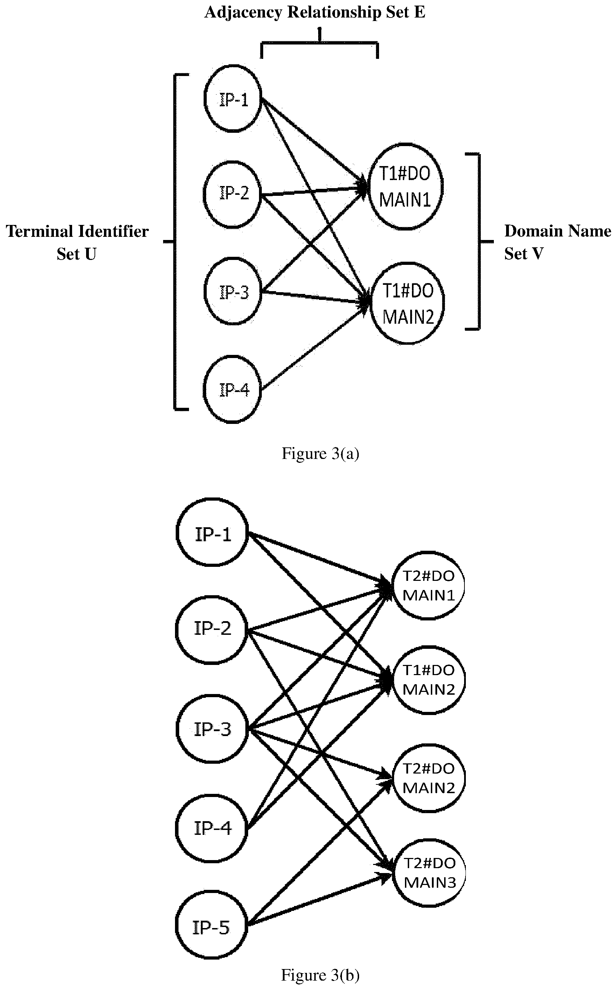

Taking a bipartite graph method as an example for constructing the relationship graph, operations of constructing the relationship graph will be described in detail below. The bipartite graph includes two types of nodes, where a node set U represents a set of terminal identifiers, and a node set V represents a set of access domain names recorded within said time interval. In addition, the bipartite graph defines E={ <ui,vi> }, representing an adjacency relationship between a terminal identifier ui and its corresponding access domain name vi. Taking the above aggregated data within the time interval T1 as an example, the access relationship graph within the time interval T1 may be constructed, as shown in Fig. 3(a).

Then, the relationship graph is updated and an existing historical relationship graph is loaded.

The obtained information of the time interval relationship graph is updated to the historical relationship graph.

Detailed description of exemplary update operations on the mentioned relationship graphs and exemplary update rules for the mentioned relationship graphs will be provided below.

It is assumed that a historical relationship graph already exists, and that any content of the relationship graph is related to the aggregated data within the above-mentioned time interval T1. Further, it is assumed that current data to be updated corresponds to a time interval T2, and aggregated data thereof is shown in Table 2 below.

**Table 2**

| Time identifier | Access domain name | Terminal IP address identifier |
|---|---|---|
| T2 | Domain 1 | IP-1, IP-2, IP-3, IP-4 |
| T2 | Domain2 | IP-3, IP-5 |
| T2 | Domain3 | IP-2, IP-3, IP-5 |

The update rules are as follows:
The aggregated data within the time interval T2 in Table 2 is compared with the data structure in the existing relationship graph (see Fig. 3(a)).

If domain names of the existing nodes in the historical relationship graph are all different from those of the aggregated data within the time interval T2, the aggregated data of newly added domain names within the time interval T2 is directly incorporated into the relationship graph. For example, in the case of that <T2, Domain3, <IP-2, IP-3, IP-5 > > in Table 2 is compared to the historical relationship graph, Domain3 is a new domain name, and the data of this domain name is directly incorporated into the relationship graph.

If any domain name of an existing node in the historical relationship graph is consistent with the domain name (Domain) of the aggregated data within the time interval T2, then a set of adjacency nodes (set A1) corresponding to the domain name Domain in the historical relationship graph is checked and compared with a set of adjacency nodes (set A2) related to the domain name Domain within the time interval T2.

If the set A1 is a subset of the set A2, then the domain node Domain and its corresponding adjacency relationships are removed from the original relationship graph, and adjacency relationship data corresponding to A2 is incorporated to update the graph. For example, if an IP address list in the historical relationship graph <T1, Domain1, <IP-1, IP-2, IP-3>> is a subset of an IP address list in a relationship graph for the time interval T2 <T2, Domain1, <IP-1, IP-2, IP-3, IP-4>>, then the node and its corresponding relationships in the historical relationship graph is deleted and updated by a node T2#Domain1 and its corresponding adjacency relationships with the IP address list.

On the contrary, if the set A2 is a subset of the set A1, the node and its adjacency relationship data in the historical relationship graph are retained, and the domain name node and the set A2 do not need to be updated to the relationship graph.

If there is no subset inclusion relationship between the sets A1 and A2, the domain name node and the set A2 are incorporated to the relationship graph. For example, <T1, Domain2, <IP-1, IP-2, IP-3, IP-4>> exists in the historical relationship graph, and <T2, Domain2, <IP-3, IP-5> > is newly added in a relationship graph for the time interval T2. Although the access domain names are identical in these two relationship graphs, the sets A1 and A2 have no inclusion relationship between each other. Therefore, a new node <T2#Domain2> is newly incorporated into the relationship graph together with its corresponding adjacency relationships.

Upon the mentioned update, Fig. 3(b) shows an update result of the original relationship graph in Fig. 3(a).

At Step S103, a list of identifiers of terminals accessing a plurality of identical domain names is mined from the terminal access relationship graph to obtain a combination of candidate nodes, and the combination of candidate nodes is screened based on a preset screening rule to obtain a detection result of botnet nodes.

When implemented, this step may be performed by a node judgment module.

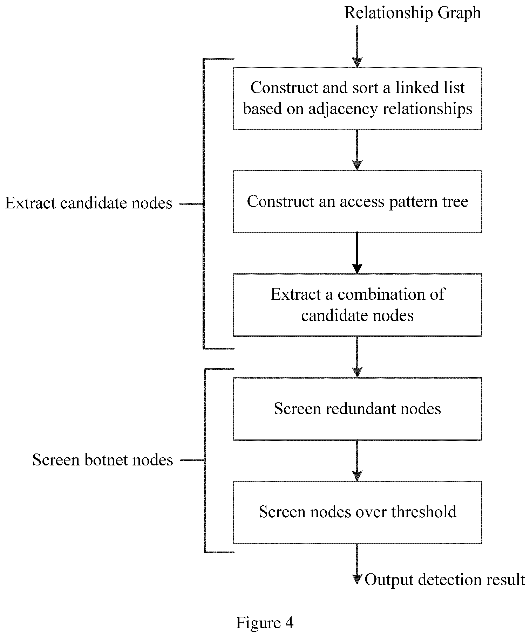

Referring to Fig. 4, firstly, from the access relationship graph obtained by the above-mentioned final update, a combination of source IPs that access a plurality of identical domain names is mined to serve as the combination of candidate nodes.

As an implementation, the step of mining the list of identifiers for the terminals accessing the plurality of identical domain names from the terminal access relationship graph to obtain the combination of candidate nodes may further include the following steps:
linked lists are constructed, based on adjacency relationships in the terminal access relationship graph, and sorted; and
an access pattern tree is constructed based on the sorted linked lists.

In one embodiment, based on the sorted linked lists and by using the terminal identifier nodes in the linked lists as tree nodes, access domain name information are added to attribute information of the tree nodes so as to construct the access pattern tree.

Then, a set of nodes on each path of the access pattern tree is extracted as a terminal identifier set, and a <time identifier#domain name> list of end nodes on the path is extracted as an access domain name set accessed by corresponding terminal identifiers collectively, so as to obtain the list of identifiers of terminals accessing a plurality of identical domain names as the combination of candidate nodes.

Finally, based on a preset screening rule, the combination of candidate nodes is screened to obtain a detection result of botnet nodes.

In an implementation, it is judged whether an inclusion relationship exists between candidate nodes in the combination of candidate nodes. If so, any included candidate node is deleted from the combination of candidate nodes to obtain a redundancy-screened combination of candidate nodes. Based on the redundancy-screened combination of candidate nodes, the number of elements in the terminal identifier set and the number of elements in the access domain name set are obtained at each candidate node. A set of candidate nodes where the number of elements in the terminal identifier set is greater than a preset threshold for the number of terminal identifiers and the number of elements in the access domain name set is greater than a preset threshold for the number of access domain names is retained to obtain the botnet nodes.

The mentioned screening for botnet nodes will be described in details with reference to the following examples.

In one embodiment, linked lists are constructed based on the adjacency relationships and then sorted.

In particular, construction of a linked list refers to that each domain name node and its corresponding adjacency nodes are constructed as a linked list based on the terminal access relationship graph. In a linked list, a <time identifier#access domain name> node is used as a head node of the linked list, and those nodes following it are terminal identifier nodes. The terminal identifier nodes are sorted in a descending order according to respective degrees (or dimensions) of the nodes in the entire relationship graph.

In one embodiment, different linked lists are sorted among each other in a sequential order, where a sorting rule thereof is to sort access domain name nodes in a descending order according to their own degrees in the entire relationship graph.

The above instance where an IP addresses is used as the terminal identifier is taken hereby. A corresponding linked list for a node <T2#Domain1> is established according to the obtained terminal access relationship graph. T2#Domain1 is used as a head node, and child nodes corresponding to the head node include <IP-1, IP-2, IP-3, IP-4>. It can be seen from the terminal access relationship graph that a sorting order with respect to these IP nodes is <IP-3, IP-2, IP-1, IP-4> according to degrees of the IP nodes.

Upon completion of sorting other linked lists in the similar way, another sorting is further performed with respect to the domain name nodes in a descending order as <T2#Domain1, T1#Domain2, T2#Domain2, T2#Domain3> according to respective degrees of the domain name nodes. Finally, a combination of sorted linked lists is obtained as shown in Table 3 below.

**Table 3**

| Time identifier#domain name | Access source IP |
|---|---|
| T2#Domain1 | IP-3, IP-2, IP-1, IP-4 |
| T 1#Domain2 | IP-3, IP-2, IP-1, IP-4 |
| T2#Domain2 | IP-3, IP-5 |
| T2#Domain3 | IP-3, IP-2, IP-5 |

Then, an access pattern tree is constructed.

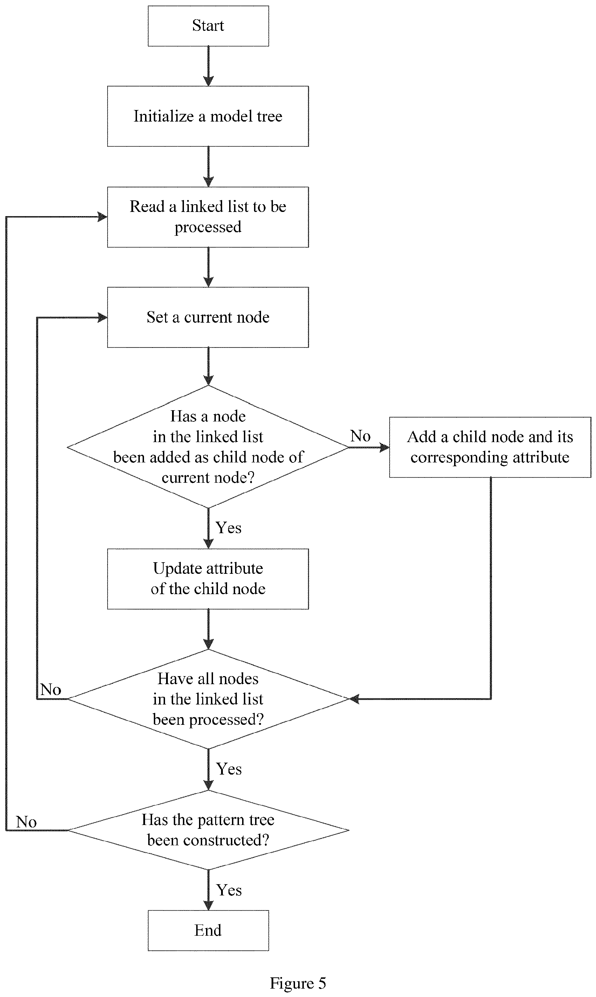

The access pattern tree uses the terminal identifier nodes as tree nodes, and access domain name information is added to attribute information of the tree nodes. The construction of the access pattern tree, as shown in Fig. 5, includes the following processes.
(1) Initialization of model tree: a tree that contains only a root node is initialized, and the root node is set by default to a Root node.
(2) Reading of linked list to be processed: in Fig. 4, a linked list has been sorted in descending order according to respective degrees of domain name nodes, and linked lists currently to be processed are read one by one based on the sorting result.
(3) Setting of current node: a current node is selected to be set. If a linked list is initially read, a root node Root is set as the current node. If the linked list is not initially read, a node processed in the last procedure is set as the current node.
(4) Processing of node in linked list: a node to be processed in a current linked list is judged, where it is judged whether the node to be processed has been added as a child node of the current node in the access pattern tree. If all child nodes of the current node do not contain the node to be processed, the node to be processed is added to the tree as a child node of the current node, and domain name identifier information of the current linked list is added to attribute information of the corresponding child node. If each of the child nodes of the current node contains a node to be processed, the domain name identifier information of the current linked list is updated to the attribute information of the corresponding child node.

It should be noted that each linked list in Fig. 4 takes a domain name node as a head node, and all terminal identifier nodes are sorted in descending order by degrees. Nodes in the terminal identifier set right serve as said nodes to be processed.

If a linked list is initially read, then the current node is a root node, and the node to be processed is a first node with the highest degree after nodes in the terminal identifier set are sorted in descending order.

If a linked list is not initially read, the current node is a terminal identifier node that has been processed in the last cycle, and the node to be processed is a terminal identifier node with a degree only next to the current node after nodes in the terminal identifier set are sorted in descending order.
(5) Judgment on end of linked list processing: it is judged whether the processed node is the last node in the linked list, if so, proceed to step (6); if not, proceed to step (3).
(6) Judgment on end of access pattern tree: it is judged whether the processed linked list is the last linked list, if so, the construction of the pattern tree ends; if not, proceed to step 2 to read the next linked list to be processed.

Taking the data in Fig. 4 as an example, the process of constructing a pattern tree is shown in Fig. 5.

Then, a combination of candidate nodes is extracted. For the constructed access pattern tree, each path of the tree starting from a root node may be a combination of candidate nodes. A set of nodes on a path represents a terminal identifier set, and a <time ID#domain name> list of end nodes on the path represents an access domain name set accessed by these terminal identifiers collectively, so that a structure of <source IP set, time ID#domain name list> is formed, which is exactly a combination of candidate botnet nodes.

In the case of that the above instance where an IP addresses is used as a terminal identifier is taken hereby with reference to Fig. 4, the following candidate nodes may be extracted:
<(IP-2,IP-3),(T2#Domain1,T1#Domain2,T2#Domain3)>;
<(IP-5,IP-3),(T2#Domain2)>;
<(IP-1,IP-2,IP-3),(T2#Domain1,T1#Domain2)>;
<(IP-5,IP-2,IP-3),(T2#Domain3)>;
<(IP-4,IP-1,IP-2,IP-3),(T2#Domain1,T1#Domain2)>;
<(IP-4,IP-1,IP-3,IP-2),(T3#Domain3)>.

Finally, botnet nodes are screened out by the followings.

### a. Redundant screening

For all structures in a combination of candidate nodes, if there is an inclusion relationship between one another, then a structure that is included by another is removed.

As that of the previous example, an inclusion relationship between the candidate nodes <(IP-1, IP-2, IP-3), (T2#Domain1, T1#Domain2)> and <(IP-4, IP-1, IP-2, IP-3), (T2#Domain1, T1#Domain2)> exists, and the included candidate node <(IP-1, IP-2, IP-3), (T2#Domain1, T1#Domain2)> is removed.

### b. Threshold screening

In order to improve the accuracy, a certain screening is performed on the extracted combination of candidate botnet nodes, and a result that meets the threshold is selected.

For example, for the number of elements in the terminal identifier set and the number of the access domain names, a threshold Th1 for the number of elements in the terminal identifier set and a threshold Th2 for the number of the access domain names are provided, respectively. For a combination of all candidate nodes, a structure where the number of elements in the terminal identifiers set is greater than the first preset threshold Th1 while the number of access domain names is greater than the second preset threshold Th2 is reserved.

After the above steps, a list of identifiers of those terminals that access a plurality of identical domain names may be obtained. A format thereof is <terminal identifier set, time identifier#domain name set>, where the terminal identifier set indicates machines infected by the botnet.

In particular, hosts that show the same access behavior many times and access domain names with suspicious risk (the number of elements in the terminal identifier set is greater than the first preset threshold Th1, while the number of elements in the access domain name set is greater than the second preset threshold Th2) behave abnormally so as to be considered as machines infected by the botnet. For a result, the greater the number of elements in the terminal identifier set and the greater the number of elements in the access domain name set, the higher the probability of these machines are to be infected by the botnet.

This embodiment is implemented, through the mentioned concepts, by acquiring original network traffic data in a monitored network, and preprocessing the original network traffic data to obtain preprocessed network traffic data; constructing a terminal access relationship graph based on the preprocessed network traffic data; and mining a list of identifiers of terminals accessing a plurality of identical domain names from the terminal access relationship graph to obtain a combination of candidate nodes, and screening the combination of candidate nodes based on a preset screening rule to obtain a detection result of botnet nodes. Thereby, behavior patterns of the terminals may be analysed and compared through information about domain name queries or accesses in terminal network behaviors, and existence of any botnet may be detected and found based on a characteristic that botnet-controlled terminals generally have identical or similar behavior patterns. Compared with existing technologies, the disclosed solution needs relatively fewer types of data and less characteristics extracted from data traffic, thereby reducing computational overhead, and effectively improving detection efficiency. Besides, this solution does not require detection based on known botnet behavior characteristics, and therefore can be advantageously applied for detection of unknown botnet threats.

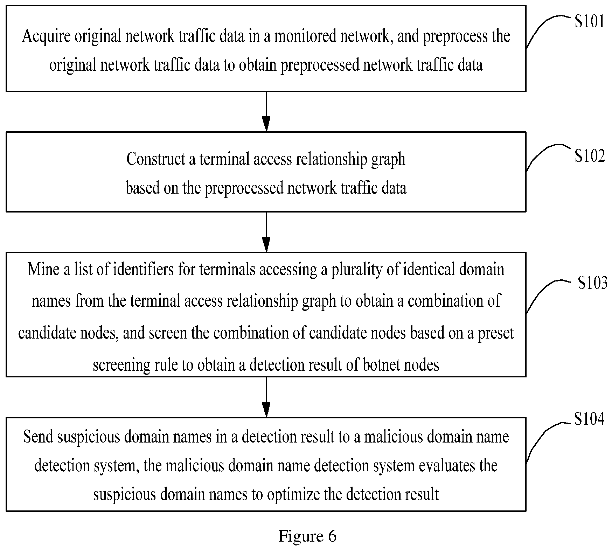

As shown in Fig. 6, a second embodiment of the present disclosure provides a botnet detection method. Based on the first embodiment shown in Fig. 2, the method further includes step S104, in which suspicious domain names in a detection result are sent to a malicious domain name detection system and evaluated by the malicious domain name detection system so that the detection result can be optimized.

Compared with the aforementioned embodiments, this embodiment may also include a scheme in which the malicious domain name detection system evaluates the suspicious domain names to optimize the detection result.

In one embodiment, after obtaining a detection result, the botnet detection system may send suspicious domain names in the detection result to the malicious domain name detection system so that the suspicious domain names can be further evaluated.

In one embodiment, the malicious domain name detection system here may be implemented by various means, such as a malicious domain name blacklist filtering system, a threat intelligence matching detection system, an arbitrary domain name detection system, or the like.

By means of the malicious domain name detection system which evaluates the suspicious domain names, the botnet detection system may further rank the detection result in terms of threat levels so as to optimize the detection result. As an example, if the malicious domain name detection system judges a domain name accessed by a group of terminals to be a botnet domain name, it may determine that the group of terminals with identical behavior patterns is suspected to be controlled by a same kind of bot virus, so that a topological relationship of the botnet can be obtained directly. In practical deployment, the botnet detection system may determine, according to actual conditions, whether this step is to be performed or not to further detect the domain name information.

This embodiment is implemented, through the mentioned concepts, by acquiring original network traffic data in a monitored network, and preprocessing the original network traffic data to obtain preprocessed network traffic data; constructing a terminal access relationship graph based on the preprocessed network traffic data; and mining a list of identifiers of terminals accessing a plurality of identical domain names from the terminal access relationship graph to obtain a combination of candidate nodes, and screening the combination of candidate nodes based on a preset screening rule to obtain a detection result of botnet nodes. Thereby, behavior patterns of the terminals may be analysed and compared through information about domain name queries or accesses in terminal network behaviors, and existence of any botnet may be detected and found based on a characteristic that botnet-controlled terminals generally have identical or similar behavior patterns. In addition, after obtaining a detection result, the botnet detection system may send suspicious domain names in the detection result to the malicious domain name detection system to enable further evaluation on the suspicious domain names, so that the botnet detection system can further rank the detection result in terms of threat levels to optimize the detection result.

Compared with existing technologies, the disclosed solution needs relatively fewer types of data and less characteristics extracted from data traffic, thereby reducing computational overhead, and effectively improving detection efficiency. Besides, this solution does not require detection based on known botnet behavior characteristics, and therefore can be advantageously applied for detection of unknown botnet threats.

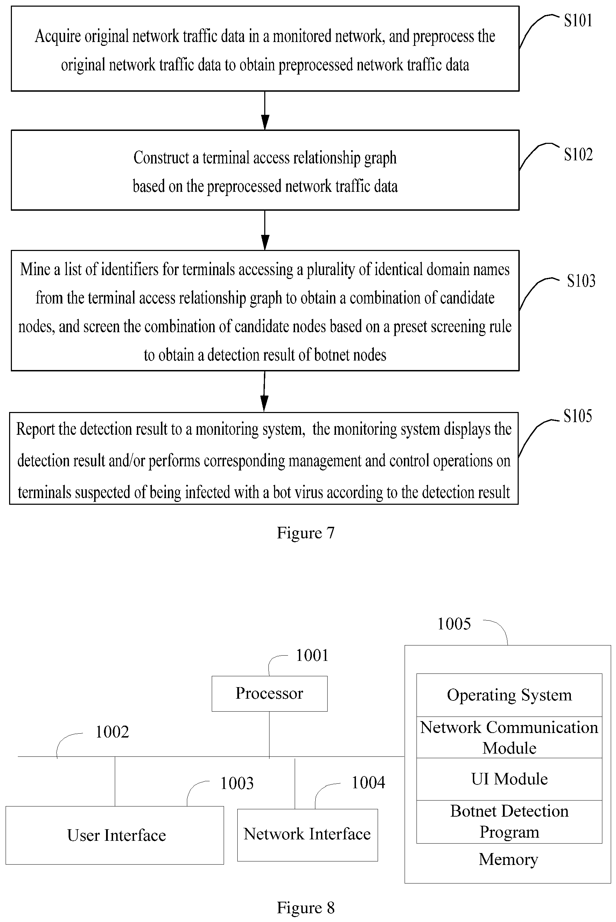

As shown in Fig. 7, a third embodiment of the present disclosure provides a botnet detection method. Based on the second embodiment shown in Fig. 2, the method further includes the following step.

At step S105, a detection result is reported to a monitoring system, and then the monitoring system displays the detection result and/or performs corresponding management and control operations on terminals suspected of being infected with a bot virus according to the detection result.

Compared with the aforementioned embodiments, this embodiment may also include a scheme in which the monitoring system performs corresponding operations on the detection result.

In one embodiment, as that in an implementation of the embodiment of the present disclosure, the detection result may be reported to the monitoring system by the botnet detection system, and may be displayed by the monitoring system.

In one embodiment, the monitoring system may also perform corresponding management and control operations on terminals suspected of being infected with the bot virus based on the detection result, for example, performing operations such as network speed limit onto terminals suspected of being infected with the bot virus.

It should be noted that the deployment scheme of the mentioned botnet detection system is merely a preferred example. In applications, the botnet detection system can be deployed depending on actual networking conditions.

In one embodiment, in addition to being deployed in the network to perform real-time traffic detection, the botnet detection system of the present disclosure may also be applicable to parsing traffic log files and outputting a network behavior analysis and detection result.

Further, an embodiment of the present disclosure also provides a botnet detection system, including a data preprocessing module, a relationship graph construction module, and a node judgment module.

The data preprocessing module receives the original traffic, and processes the original traffic data by extracting valid fields in the traffic data and performing data cleaning to remove redundant and duplicate information.

The relationship graph construction module receives log data processed by the data preprocessing module, and performs operations of terminal identifier information aggregation, relationship graph construction, and relationship graph update. The main operations of this module include: aggregating terminal identifier information within the same time interval with respect to each domain name of interest to form an aggregation structure similar to <time identifier, domain name, terminal identifier list for accessing domain name>, respectively; and constructing and updating an adjacency relationship graph between a node with the domain name of interest and a list of terminal identifiers that access the domain name.

The node judgment module mines a list of identifiers of terminals accessing a plurality of identical domain names from the relationship graph output by the relationship graph construction module, and obtains infected botnet nodes upon screening. The main operations of this module include: mining a list of identifiers of terminals accessing a plurality of identical domain names from the access relationship graph to form a structure similar to <terminal identifier set, access domain name set>, the output structure being the extracted combination of candidate nodes, and then setting corresponding screening rules to screen the combination of candidate nodes, a resulted screening output being exactly the detected botnet nodes.

In one embodiment, the data preprocessing module is configured to acquire original network traffic data in a monitored network, and to preprocess the original network traffic data to obtain preprocessed network traffic data. The relationship graph construction module is configured to construct a terminal access relationship graph based on the preprocessed network traffic data. The node judgment module is configured to mine a list of identifiers of terminals accessing a plurality of identical domain names from the terminal access relationship graph to obtain a combination of candidate nodes, and screen the combination of candidate nodes based on a preset screening rule to obtain a detection result of botnet nodes.

In one embodiment, the mentioned data preprocessing module is also configured to acquire real-time traffic data or traffic log files within a preset time range in the monitored network as the original network traffic data. The real-time traffic data or the traffic log files include at least domain name query requests from the terminals and/or HTTP connection requests from the terminals for accessing the domain names.

In one embodiment, the mentioned data preprocessing module is further configured to group the original network traffic data by time intervals; to extract valid fields from the network traffic data grouped by time intervals, the valid fields including at least three key fields of timestamp, terminal identifier, and access domain name; and to clean the network traffic data containing the valid fields and filter redundant data and a whitelist so as to obtain log sequences each having a data structure of <timestamp, terminal identifier, access domain name>.

In one embodiment, the mentioned relationship graph construction module is also configured to extract, from the preprocessed network traffic data, information about terminal identifiers identifying terminal information and domain names accessed or inquired by the terminals in terminal network behaviors within a corresponding time interval; to aggregate terminal identifier information within the same time interval with respect to each domain name of interest, based on the extracted information about terminal identifiers and domain names accessed or queried by the terminals, to form an aggregation structure of <time identifier, domain name, terminal identifier set for accessing domain name>, respectively; and to construct and update, based on the aggregation structure, an adjacency relationship graph between a node with the domain name of interest and a list of terminal identifiers that access the domain name to obtain the terminal access relationship graph.

In one embodiment, the mentioned node judgment module is further configured to construct and sort a linked list based on adjacency relationships in the terminal access relationship graph; to construct an access pattern tree based on the sorted linked list; and to extract a set of nodes on each path of the access pattern tree as a terminal identifier set, and a <time identifier#domain name> list of end nodes on the paths as an access domain name set accessed by corresponding terminal identifiers collectively so that the list of identifiers of terminals accessing a plurality of identical domain names can be obtained as the combination of candidate nodes.

It is judged whether an inclusion relationship exists between candidate nodes in the combination of candidate nodes. If the judgment is positive, the included candidate node is deleted from the combination of candidate nodes to obtain a redundancy-screened combination of candidate nodes. Based on the redundancy-screened combination of candidate nodes, the number of elements in the terminal identifier set and the number of elements in the access domain name set are obtained at each candidate node. Then, a set of candidate nodes where the number of elements in the terminal identifier set is greater than a preset threshold for the number of terminal identifiers and the number of elements in the access domain name set is greater than a preset threshold for the number of access domain names is retained so as to obtain the botnet nodes.

In one embodiment, the botnet detection system further includes a processing module, which is configured to send suspicious domain names in a detection result to a malicious domain name detection system so that the suspicious domain names can be evaluated by malicious domain name detection system to optimize the detection result; and to report the detection result to a monitoring system so that the monitoring system displays the detection result and/or performs corresponding management and control operations onto terminals suspected of being infected with a bot virus according to the detection result.

For process and principle of implementing botnet detection in this embodiment, reference can be made to the foregoing embodiments, and the details will not be described any further here.

Compared with existing technologies, the disclosed solution needs relatively fewer types of data and less characteristics extracted from data traffic, thereby reducing computational overhead, and effectively improving detection efficiency. Besides, this solution does not require detection based on known botnet behavior characteristics, and therefore can be advantageously applied for detection of unknown botnet threats.

Additionally, an embodiment of the present disclosure further provides a botnet detection system, including: a memory, a processor, and a botnet detection program stored on the memory and executable on the processor. The botnet detection program may, when being executed by the processor, implement steps of any one of the botnet detection methods as described.

In one embodiment, as shown in Fig. 8, the system of this embodiment may include a processor 1001, such as a CPU, a network interface 1004, a user interface 1003, a memory 1005, and a communication bus 1002. Herein, the communication bus 1002 is configured to realize connection and communication between these components. The user interface 1003 may include a display screen (Display) and an input unit, such as a keyboard (Keyboard). Optionally, the user interface 1003 may also include a standard wired interface and a wireless interface. The network interface 1004 may optionally include a standard wired interface and a wireless interface (such as a WI-FI interface). The memory 1005 may be a high-speed RAM memory, or a stable memory (non-volatile memory), such as a magnetic disk memory. Optionally, the memory 1005 may also be a storage device independent of the mentioned processor 1001.

Those skilled in the art may understand that the system structure shown in Fig. 8 does not constitute a limitation to a platform, and may include more or less components than those shown in the figure, or alternatively include a combination of certain components, or different component arrangements.

As shown in Fig. 8, the memory 1005 as a computer storage medium may include an operating system, a network communication module, a user interface module, and a botnet detection program.

In the system shown in Fig. 8, the network interface 1004 is mainly configured to connect to a network server and perform data communication with the network server; the user interface 1003 is mainly configured to connect to a client and perform data communication with the client; and the processor 1001 may be configured to call a botnet detection program stored in the memory 1005, and perform the operations of: acquiring original network traffic data in a monitored network, and preprocessing the original network traffic data to obtain preprocessed network traffic data; constructing a terminal access relationship graph based on the preprocessed network traffic data; and mining a list of identifiers of terminals accessing a plurality of identical domain names from the terminal access relationship graph to obtain a combination of candidate nodes, and screening the combination of candidate nodes based on a preset screening rule to obtain a detection result of botnet nodes.

In one embodiment, the processor 1001 may be configured to call a botnet detection program stored in the memory 1005, and further perform the operation of: acquiring real-time traffic data or traffic log files within a preset time range in the monitored network as the original network traffic data. The real-time traffic data or the traffic log files include at least domain name query requests from the terminals and/or HTTP connection requests from the terminals for accessing the domain names.

In one embodiment, the processor 1001 may be configured to call a botnet detection program stored in the memory 1005, and further perform the operations of: grouping the original network traffic data by time intervals; extracting valid fields from the network traffic data grouped by time intervals, where the valid fields include at least three key fields of timestamp, terminal identifier, and access domain name; and cleaning the network traffic data that contains the valid fields and filtering redundant data and a whitelist to obtain log sequences each having a data structure of <timestamp, terminal identifier, access domain name>.

In one embodiment, the processor 1001 may be configured to call a botnet detection program stored in the memory 1005, and further perform the operations of: extracting, from the preprocessed network traffic data, information about terminal identifiers identifying terminal information and domain names accessed or inquired by the terminals in terminal network behaviors within a corresponding time interval; aggregating terminal identifier information within the same time interval with respect to each domain name of interest based on the extracted information about terminal identifiers and domain names accessed or queried by the terminals to form an aggregation structure of <time identifier, domain name, terminal identifier set for accessing domain name>, respectively; and constructing, based on the aggregation structure, and updating an adjacency relationship graph between a node with the domain name of interest and a list of terminal identifiers that access the domain name to obtain the terminal access relationship graph.

In one embodiment, the processor 1001 may be configured to call a botnet detection program stored in the memory 1005, and further perform the operations of: constructing and sorting a linked list based on adjacency relationships in the terminal access relationship graph; constructing an access pattern tree based on the sorted linked list; and extracting a set of nodes on each path of the access pattern tree as a terminal identifier set, and a <time identifier#domain name> list of end nodes on the paths as an access domain name set accessed by corresponding terminal identifiers collectively so that the list of identifiers of terminals accessing a plurality of identical domain names can be obtained as the combination of candidate nodes.

In one embodiment, the processor 1001 may be configured to call a botnet detection program stored in the memory 1005, and further perform the operations of: constructing, based on the terminal access relationship graph, each domain name node and its corresponding adjacency nodes as a linked list, where the <time identifier#access domain name> node in the linked list is used as a head node of the linked list, and those nodes following it serve as terminal identifier nodes, the terminal identifier nodes are sorted in a descending order according to respective degrees of the nodes in the entire relationship graph; and sorting different linked lists among each other in a sequential order, where a sorting rule thereof is to sort access domain name nodes in a descending order according to their own degrees in the entire relationship graph.

In one embodiment, the processor 1001 may be configured to call a botnet detection program stored in the memory 1005, and further perform the operations of: adding, based on the sorted linked lists and by using terminal identifier nodes in the linked lists as tree nodes, access domain name information to attribute information of the tree nodes so as to construct the access pattern tree.

In one embodiment, the processor 1001 may be configured to call a botnet detection program stored in the memory 1005, and further perform the operations of: judging whether an inclusion relationship exists between candidate nodes in the combination of candidate nodes; deleting, if the judgment is positive, the included candidate node from the combination of candidate nodes to obtain a redundancy-screened combination of candidate nodes; obtaining the number of elements in the terminal identifier set and the number of elements in the access domain name set at each candidate node based on the redundancy-screened combination of candidate nodes; and reserving a set of candidate nodes where the number of elements in the terminal identifier set is greater than a preset threshold for the number of terminal identifiers and the number of elements in the access domain name set is greater than a preset threshold for the number of access domain names to obtain the botnet nodes.

In one embodiment, the processor 1001 may be configured to call a botnet detection program stored in the memory 1005, and further perform the operation of: sending suspicious domain names in a detection result to a malicious domain name detection system so that the suspicious domain names are evaluated by malicious domain name detection system to optimize the detection result.

In one embodiment, the processor 1001 may be configured to call a botnet detection program stored in the memory 1005, and further perform the operation of: reporting the detection result to a monitoring system so that the monitoring system displays the detection result and/or performs, according to the detection result, corresponding management and control operations onto terminals suspected of being infected with a bot virus.

For process and principle of implementing botnet detection in this embodiment, reference can be made to the foregoing embodiments, and the details will not be described here any further.

Additionally, an embodiment of the present disclosure also provides a computer-readable storage medium storing thereon a botnet detection program. The botnet detection program, when executed by a processor, may implement steps of any one of the botnet detection methods as described above.

For process and principle of implementing botnet detection in this embodiment, reference can be made to the foregoing embodiments, and the details will not be described here any further.

Compared with existing technologies, a botnet detection method and system, and a storage medium provided by the embodiments of the present disclosure may be implemented by obtaining original network traffic data in a monitored network and preprocessing the original network traffic data to obtain preprocessed network traffic data; constructing a terminal access relationship graph on the basis of the preprocessed network traffic data; mining an identifier list of terminals accessing a plurality of the same domain names from the terminal access relationship graph to obtain a candidate node, and screening, based on a preset screening rule, the candidate node combination to obtain a botnet node detection result. Thereby, behavior patterns of the terminals may be analysed and compared through information about domain name queries or accesses in terminal network behaviors, and existence of any botnet may be detected and found based on a characteristic that botnet-controlled terminals generally have identical or similar behavior patterns. Compared with existing technologies, the disclosed solution needs relatively fewer types of data and less characteristics extracted from data traffic, thereby reducing computational overhead, and effectively improving detection efficiency. Besides, this solution does not require detection based on known botnet behavior characteristics, and therefore can be advantageously applied for detection of unknown botnet threats.

The forgoing is merely preferred embodiments of the present disclosure and not intended to limit its scope, and any equivalent structures or equivalent flow variations made by references of the description and accompanying drawings of the present disclosure, applied either directly or indirectly in other relevant technical fields, shall be included in the protection scope of the present disclosure.

## Claims

1. A botnet detection method applied to a botnet detection system, comprising steps of:
acquiring original network traffic data in a monitored network, and preprocessing the original network traffic data to obtain preprocessed network traffic data (S101);
constructing, based on the preprocessed network traffic data, a terminal access relationship graph (S 102); and
mining, from the terminal access relationship graph, a list of identifiers of terminals accessing a plurality of identical domain names to obtain a combination of candidate nodes, and screening, based on a preset screening rule, the combination of candidate nodes to obtain a detection result of botnet nodes (S103),
**characterized in that**:
the step of mining the list of identifiers of the terminals accessing the plurality of identical domain names from the terminal access relationship graph to obtain the combination of candidate nodes further comprises:
constructing, based on adjacency relationships in the terminal access relationship graph, linked lists, and sorting the linked lists;
constructing, based on the sorted linked lists, an access pattern tree; and
extracting a set of nodes on each path of the access pattern tree as a terminal identifier set, and a <time identifier#domain name> list of end nodes on the path as an access domain name set accessed by corresponding terminal identifiers collectively so as to obtain the list of identifiers of terminals accessing a plurality of identical domain names as the combination of candidate nodes.

2. The method according to claim 1, **characterized in that**, the step of acquiring the original network traffic data in the monitored network further comprises:
acquiring real-time traffic data or traffic log files within a preset time range in the monitored network as the original network traffic data, wherein the real-time traffic data or the traffic log files include at least domain name query requests from the terminals and/or HTTP connection requests from the terminals for accessing the domain names.

3. The method according to claim 2, **characterized in that**, the step of preprocessing the original network traffic data to obtain the preprocessed network traffic data further comprises:
grouping the original network traffic data by time intervals;
extracting valid fields from the network traffic data grouped by time intervals, wherein the valid fields include at least three key fields of timestamp, terminal identifier, and access domain name; and
cleaning the network traffic data that contains the valid fields and filtering redundant data and a whitelist to obtain log sequences each having a data structure of <timestamp, terminal identifier, access domain name>.

4. The method according to claim 3, **characterized in that**, the step of constructing the terminal access relationship graph based on the preprocessed network traffic data further comprises:
extracting, from the preprocessed network traffic data, information about terminal identifiers identifying terminal information and domain names accessed or inquired by the terminals in terminal network behaviors within a corresponding time interval;
aggregating, based on the extracted information about the terminal identifiers and the domain names accessed or queried by the terminals, terminal identifier information within the same time interval with respect to a domain name of interest to form an aggregation structure of <time identifier, domain name, terminal identifier set for accessing domain name>; and
constructing and updating, based on the aggregation structure, an adjacency relationship graph between a node with the domain name and a list of terminal identifiers that access the domain name to obtain the terminal access relationship graph.

5. The method according to claim 4, **characterized in that**, the step of constructing the linked lists based on the adjacency relationships in the terminal access relationship graph and sorting the linked lists further comprises:
constructing, based on the terminal access relationship graph, each domain name node and its corresponding adjacency nodes as a linked list, wherein the <time identifier#access domain name> node in the linked list serves as a head node of the linked list, and nodes following the head node serve as terminal identifier nodes, and wherein the terminal identifier nodes are sorted in a descending order in terms of degrees of the terminal identifier nodes in the entire relationship graph; and
sorting different linked lists in a sequential order, wherein a sorting rule is set to sort access domain name nodes in a descending order in terms of degrees of the access domain name nodes in the entire relationship graph.

6. The method according to claim 5, **characterized in that**, the step of constructing the access pattern tree based on the sorted linked lists further comprises:
adding, based on the sorted linked lists and by using the terminal identifier nodes in the linked lists as tree nodes, access domain name information to attribute information of the tree nodes to construct the access pattern tree.

7. The method according to claim 6, **characterized in that**, the step of screening the combination of candidate nodes to obtain a detection result of botnet nodes based on a preset screening rule further comprises:
judging whether an inclusion relationship exists between candidate nodes in the combination of candidate nodes;
deleting, if the judgment is positive, the included candidate node from the combination of candidate nodes to obtain a redundancy-screened combination of candidate nodes;
obtaining, based on the redundancy-screened combination of candidate nodes, the number of elements in the terminal identifier set and the number of elements in the access domain name set at each candidate node; and
retaining a set of candidate nodes where the number of elements in the terminal identifier set is greater than a preset threshold for the number of terminal identifiers and the number of elements in the access domain name set is greater than a preset threshold for the number of access domain names so as to obtain the botnet nodes.

8. The method according to any one of claims 1 to 7, further comprising:
sending suspicious domain names in the detection result to a malicious domain name detection system, which evaluates the suspicious domain names to optimize the detection result (S105).

9. The method according to any one of claims 1 to 8, further comprising:
reporting the detection result to a monitoring system, which displays the detection result and/or performs, according to the detection result, corresponding management and control operations onto terminals suspected of being infected with a bot virus (S106).

10. A network access system, **characterized by** comprising: a botnet detection system; and a malicious domain name detection system, a monitoring system and a DNS server, each of which is communicatively connected to the botnet detection system, wherein the botnet detection system is further connected to a number of access terminals;
wherein the DNS server is configured to provide domain name access services to the access terminals;
wherein the malicious domain name detection system is configured to receive a suspicious domain name in the detection result sent by the botnet detection system, and evaluate the suspicious domain name to optimize the detection result; and
wherein the monitoring system is configured to receive the detection result reported by the botnet detection system so as to display the detection result and/or perform, according to the detection result, corresponding management and control operations on terminals suspected of being infected with a bot virus,
wherein the botnet detection system is configured to:
acquire original network traffic data in a monitored network, and preprocess the original network traffic data to obtain preprocessed network traffic data (S101);
construct, based on the preprocessed network traffic data, a terminal access relationship graph (S102); and
mine, from the terminal access relationship graph, a list of identifiers of terminals accessing a plurality of identical domain names to obtain a combination of candidate nodes, and screen, based on a preset screening rule, the combination of candidate nodes to obtain a detection result of botnet nodes (S103),
**characterized in that**:
to mine the list of identifiers of the terminals accessing the plurality of identical domain names from the terminal access relationship graph to obtain the combination of candidate nodes further comprises, the botnet detection system is further configured to:
construct, based on adjacency relationships in the terminal access relationship graph, linked lists, and sorting the linked lists;
construct, based on the sorted linked lists, an access pattern tree; and
extract a set of nodes on each path of the access pattern tree as a terminal identifier set, and a <time identifier#domain name> list of end nodes on the path as an access domain name set accessed by corresponding terminal identifiers collectively so as to obtain the list of identifiers of terminals accessing a plurality of identical domain names as the combination of candidate nodes.

11. A botnet detection system, **characterized by** comprising: a memory, a processor, and a botnet detection program stored on the memory and executable on the processor, wherein the botnet detection program, when executed by the processor, implements steps of the botnet detection method according to any one of claims 1 to 9.

12. A computer-readable storage medium storing thereon a botnet detection program which, when executed by a processor, implements steps of the botnet detection method according to any one of claims 1 to 9.

## Patentansprüche

1. Botnet-Erkennungsverfahren, welches an einem Botnet-Erkennungssystem angewendet wird, umfassend die folgende Schritte:
Erfassen ursprünglicher Netzwerkverkehrsdaten in einem überwachten Netzwerk und Vorverarbeiten der ursprünglichen Netzwerkverkehrsdaten, um vorverarbeitete Netzwerkverkehrsdaten zu erhalten (S101);
Erstellen, auf Grundlage der vorverarbeiteten Netzwerkverkehrsdaten, eines Endgerätzugriffsbeziehungsgraphen (S102); und
Gewinnen, aus dem Endgerätzugriffsbeziehungsgraphen, einer Liste von Kennungen von Endgeräten, welche auf eine Mehrzahl identischer Domainnamen zugreifen, um eine Kombination von Kandidatenknoten zu erhalten, und Prüfen, auf Grundlage einer vorgegebenen Prüfregel, der Kombination von Kandidatenknoten, um ein Erkennungsergebnis von Botnet-Knoten zu erhalten (S103);
**dadurch gekennzeichnet, dass**:
der Schritt des Gewinnens der Liste von Kennungen der Endgeräte, welche auf die Mehrzahl identischer Domainnamen zugreifen, aus dem Endgerätzugriffsbeziehungsgraphen, um die Kombination von Kandidatenknoten zu erhalten, ferner umfasst:
Erstellen, auf Grundlage von Adjazenzbeziehungen in dem Endgerätzugriffsbeziehungsgraphen, verknüpfter Listen und Sortieren der verknüpften Listen;
Erstellen, auf Grundlage der sortierten verknüpften Listen, eines Zugriffsmusterbaums; und
Extrahieren eines Satzes von Knoten auf jedem Pfad des Zugriffsmusterbaums als einen Endgerätkennungssatz und einer <Zeitkennung#Domainname> -Liste von Endknoten auf dem Pfad als einen Zugriffsdomainnamesatz, auf welchen durch entsprechende Endgerätekennungen kollektiv zugegriffen wird, um die Liste von Kennungen von Endgeräten, welche auf eine Mehrzahl identischer Domainnamen zugreifen, als die Kombination von Kandidatenknoten zu erhalten.

2. Verfahren nach Anspruch 1, **dadurch gekennzeichnet, dass** der Schritt des Erfassens der ursprünglichen Netzwerkverkehrsdaten in dem überwachten Netzwerk ferner umfasst:
Erfassen von Echtzeit-Verkehrsdaten oder Verkehrsprotokolldateien innerhalb eines vorgegebenen Zeitbereichs in dem überwachten Netzwerk als die ursprünglichen Netzwerkverkehrsdaten, wobei die Echtzeit-Verkehrsdaten oder die Verkehrsprotokolldateien wenigstens Domainnameabfrageanfragen von den Endgeräten und/oder HTTP-Verbindungsanfragen von den Endgeräten zum Zugreifen auf die Domainnamen umfassen.

3. Verfahren nach Anspruch 2, **dadurch gekennzeichnet, dass** der Schritt des Vorverarbeitens der ursprünglichen Netzwerkverkehrsdaten, um die vorverarbeiteten Netzwerkverkehrsdaten zu erhalten, ferner umfasst:
Gruppieren der ursprünglichen Netzwerkverkehrsdaten nach Zeitintervallen;
Extrahieren gültiger Felder aus den nach Zeitintervallen gruppierten Netzwerkverkehrsdaten, wobei die gültigen Felder wenigstens die drei Schlüsselfelder Zeitstempel, Endgerätkennung und Zugriffsdomainname umfassen; und
Bereinigen der Netzwerkverkehrsdaten, welche die gültigen Felder enthalten, und Filtern redundanter Daten und einer Positivliste, um Protokollsequenzen zu erhalten, welche jeweils eine Datenstruktur von <Zeitstempel, Endgerätkennung, Zugriffsdomainname> aufweisen.

4. Verfahren nach Anspruch 3, **dadurch gekennzeichnet, dass** der Schritt des Erstellens des Endgerätzugriffsbeziehungsgraphen auf Grundlage der vorverarbeiteten Netzwerkverkehrsdaten, ferner umfasst:
Extrahieren, aus den vorverarbeiteten Netzwerkverkehrsdaten, von Informationen über Endgerätekennungen, welche Endgerätinformationen und Domainnamen kennzeichnen, auf welche innerhalb eines entsprechenden Zeitintervalls durch die Endgeräte zugegriffen wird oder welche innerhalb des entsprechenden Zeitintervalls durch sie erfragt werden;
Aggregieren, auf Grundlage der extrahierten Informationen über die Endgerätekennungen und die Domainnamen, auf welche durch die Endgeräte zugegriffen wird oder welche durch sie abgefragt werden, von Endgerätkennungsinformationen innerhalb des gleichen Zeitintervalls in Bezug auf einen Domainnamen von Interesse, um eine Aggregationsstruktur von <Zeitkennung, Domainname, Zeitkennungssatz zum Zugreifen auf Domainname> zu bilden; und
Erstellen und Aktualisieren, auf Grundlage der Aggregationsstruktur, eines Adjazenzbeziehungsgraphen zwischen einem Knoten mit dem Domainnamen und einer Liste von Endgerätekennungen, welche auf den Domainnamen zugreifen, um den Endgerätzugriffsbeziehungsgraphen zu erhalten.

5. Verfahren nach Anspruch 4, **dadurch gekennzeichnet, dass** der Schritt des Erstellens der verknüpften Listen auf Grundlage der Adjazenzbeziehungen in dem Endgerätzugriffsbeziehungsgraphen und des Sortierens der verknüpften Listen ferner umfasst:
Erstellen, auf Grundlage des Endgerätzugriffsbeziehungsgraphen, jedes Domainnameknotens und seiner entsprechenden Adjazenzknoten als eine verknüpfte Liste, wobei der <Zeitkennung#Zugriffsdomainname> -Knoten in der verknüpften Liste als ein Kopfknoten der verknüpften Liste dient und auf den Kopfknoten folgende Knoten als Endgerätkennungsknoten dienen und wobei die Endgerätkennungsknoten im Hinblick auf Ränge der Endgerätkennungsknoten in dem gesamten Beziehungsgraphen in einer absteigenden Reihenfolge sortiert werden; und
Sortieren verschiedener verknüpfter Listen in einer sequenziellen Reihenfolge, wobei eine Sortierregel festgelegt ist, um Zugriffsdomainnameknoten im Hinblick auf Ränge der Zugriffsdomainnameknoten in dem gesamten Beziehungsgraphen in einer absteigenden Reihenfolge zu sortieren.

6. Verfahren nach Anspruch 5, **dadurch gekennzeichnet, dass** der Schritt des Erstellens des Zugriffsmusterbaums auf Grundlage der sortierten verknüpften Listen ferner umfasst:
Addieren, auf Grundlage der sortierten verknüpften Listen und unter Verwendung der Endgerätkennungsknoten in den verknüpften Listen als Baumknoten, von Zugriffsdomainnameinformationen zu Attributinformationen der Baumknoten, um den Zugriffsmusterbaum zu erstellen.

7. Verfahren nach Anspruch 6, **dadurch gekennzeichnet, dass** der Schritt des Prüfens der Kombination von Kandidatenknoten, um ein Erkennungsergebnis von Botnet-Knoten zu erhalten, auf Grundlage einer vorgegebenen Prüfregel ferner umfasst:
Beurteilen, ob zwischen Kandidatenknoten in der Kombination von Kandidatenknoten eine Inklusionsbeziehung existiert;
Löschen, wenn die Beurteilung positiv ist, des inkludierten Kandidatenknotens aus der Kombination von Kandidatenknoten, um eine redundanzgeprüfte Kombination von Kandidatenknoten zu erhalten;
Erhalten, auf Grundlage der redundanzgeprüften Kombination von Kandidatenknoten, der Anzahl von Elementen in dem Endgerätkennungssatz und der Anzahl von Elementen in dem Zugriffsdomainnamesatz an jedem Kandidatenknoten; und
Behalten eines Satzes von Kandidatenknoten, in welchem die Anzahl von Elementen in dem Endgerätkennungssatz größer ist als ein vorgegebener Schwellenwert für die Anzahl von Endgerätekennungen und die Anzahl von Elementen in dem Zugriffsdomainnamesatz größer ist als ein vorgegebener Schwellenwert für die Anzahl von Zugriffsdomainnamen, um die Botnet-Knoten zu erhalten.

8. Verfahren nach einem der Ansprüche 1 bis 7, ferner umfassend:
Senden verdächtiger Domainnamen in dem Erkennungsergebnis an ein System zur Erkennung schädlicher Domainnamen, welches die verdächtigen Domainnamen evaluiert, um das Erkennungsergebnis zu optimieren (S105).

9. Verfahren nach einem der Ansprüche 1 bis 8, ferner umfassend:
Melden des Erkennungsergebnisses an ein Überwachungssystem, welches das Erkennungsergebnis anzeigt und/oder gemäß dem Erkennungsergebnis entsprechende Verwaltungs- und Steueroperationen auf Endgeräten durchführt, welche verdächtig sind, mit einem Bot-Virus infiziert zu sein (S106).

10. Netzwerkzugriffssystem, **dadurch gekennzeichnet, dass** es umfasst: ein Botnet-Erkennungssystem; und ein System zur Erkennung bösartiger Domainnamen, ein Überwachungssystem und einen DNS-Server, von welchem jedes kommunikativ mit dem Botnet-Erkennungssystem verbunden ist, wobei das Botnet-Erkennungssystem ferner mit einer Anzahl von Zugriffsendgeräten verbunden ist;
wobei der DNS-Server dazu eingerichtet ist, Domainnamezugriffsdienste für die Zugriffsendgeräte bereitzustellen
wobei das System zur Erkennung bösartiger Domainnamen dazu eingerichtet ist, in dem durch das Botnet-Erkennungssystem gesendeten Erkennungsergebnis einen verdächtigen Domainnamen zu erhalten und den verdächtigen Domainnamen zu evaluieren, um das Erkennungsergebnis zu optimieren; und
wobei das Überwachungssystem dazu eingerichtet ist, das durch das Botnet-Erkennungssystem gemeldete Erkennungsergebnis zu erhalten, um das Erkennungsergebnis anzuzeigen, und/oder gemäß dem Erkennungsergebnis entsprechende Verwaltungs- und Steueroperationen an Endgeräten durchzuführen, welche verdächtig sind, mit einem Bot-Virus infiziert zu sein,
wobei das Botnet-Erkennungssystem eingerichtet ist, zum:
Erfassen ursprünglicher Netzwerkverkehrsdaten in einem überwachten Netzwerk und Vorverarbeiten der ursprünglichen Netzwerkverkehrsdaten, um vorverarbeitete Netzwerkverkehrsdaten zu erhalten (S101);
Erstellen, auf Grundlage der vorverarbeiteten Netzwerkverkehrsdaten, eines Endgerätzugriffsbeziehungsgraphen (S102); und
Gewinnen, aus dem Endgerätzugriffsbeziehungsgraphen, einer Liste von Kennungen von Endgeräten, welche auf eine Mehrzahl identischer Domainnamen zugreifen, um eine Kombination von Kandidatenknoten zu erhalten, und Prüfen, auf Grundlage einer vorgegebenen Prüfregel, der Kombination von Kandidatenknoten, um ein Erkennungsergebnis von Botnet-Knoten zu erhalten (S103);
**dadurch gekennzeichnet, dass**:
das Gewinnen der Liste von Kennungen der Endgeräte, welche auf die Mehrzahl identischer Domainnamen zugreifen, aus dem Endgerätzugriffsbeziehungsgraphen, um die Kombination von Kandidatenknoten zu erhalten, ferner umfasst, dass das Botnet-Erkennungssystem ferner eingerichtet ist, zum:
Erstellen, auf Grundlage von Adjazenzbeziehungen in dem Endgerätzugriffsbeziehungsgraphen, verknüpfter Listen und Sortieren der verknüpften Listen;
Erstellen, auf Grundlage der sortierten verknüpften Listen, eines Zugriffsmusterbaums; und
Extrahieren eines Satzes von Knoten auf jedem Pfad des Zugriffsmusterbaums als einen Endgerätkennungssatz und einer <Zeitkennung#Domainname> -Liste von Endknoten auf dem Pfad als einen Zugriffsdomainnamesatz, auf welchen durch entsprechende Endgerätekennungen kollektiv zugegriffen wird, um die Liste von Kennungen von Endgeräten, welche auf eine Mehrzahl identischer Domainnamen zugreifen, als die Kombination von Kandidatenknoten zu erhalten.

11. Botnet-Erkennungssystem, **dadurch gekennzeichnet, dass** es umfasst: einen Speicher, einen Prozessor und ein Botnet-Erkennungsprogramm, welches auf dem Speicher gespeichert ist und auf dem Prozessor ausführbar ist, wobei das Botnet-Erkennungsprogramm, wenn es durch den Prozessor ausgeführt wird, die Schritte des Botnet-Erkennungsverfahrens nach einem der Ansprüche 1 bis 9 implementiert.

12. Computerlesbares Speichermedium, welches darauf ein Botnet-Erkennungsprogramm speichert, welches, wenn es durch einen Prozessor ausgeführt wird, die Schritte des Botnet-Erkennungsverfahrens nach einem der Ansprüche 1 bis 9 implementiert.

## Revendications

1. Procédé de détection de réseaux de zombies appliqué à un système de détection de réseaux de zombies, comprenant des étapes :
d'acquisition de données de trafic réseau d'origine dans un réseau surveillé, et de prétraitement des données de trafic réseau d'origine pour obtenir des données de trafic réseau prétraitées (S101) ;
de construction, sur la base des données de trafic réseau prétraitées, d'un graphe de relation d'accès aux terminaux (S102) ; et
d'extraction, à partir du graphe de relation d'accès aux terminaux, d'une liste d'identifiants de terminaux accédant à une pluralité de noms de domaine identiques pour obtenir une combinaison de nœuds candidats, et de filtrage, sur la base d'une règle de filtrage prédéfinie, de la combinaison de nœuds candidats pour obtenir un résultat de détection de nœuds de réseau de zombies (S103),
**caractérisé en ce que** :
l'étape d'extraction de la liste d'identifiants des terminaux accédant à la pluralité de noms de domaine identiques à partir du graphe de relation d'accès aux terminaux pour obtenir la combinaison de nœuds candidats comprend en outre :
la construction, sur la base de relations d'adjacence dans le graphe de relation d'accès aux terminaux, de listes liées et le tri des listes liées ;
la construction, à partir des listes liées triées, d'une arborescence de modèle d'accès ; et
l'extraction d'un ensemble de nœuds sur chaque chemin de l'arborescence de modèle d'accès en tant qu'ensemble d'identifiants de terminaux, et d'une liste <identifiant d'heure#nom de domaine> de nœuds finaux sur le chemin en tant qu'ensemble de noms de domaines d'accès accessibles par des identifiants de terminaux correspondants collectivement de manière à obtenir la liste d'identifiants de terminaux accédant à une pluralité de noms de domaines identiques en tant que combinaison de nœuds candidats.

2. Procédé selon la revendication 1, **caractérisé en ce que** l'étape d'acquisition des données de trafic réseau d'origine dans le réseau surveillé comprend en outre :
l'acquisition de données de trafic en temps réel ou de fichiers journaux de trafic dans une plage de temps prédéfinie dans le réseau surveillé en tant que données de trafic réseau d'origine, dans lequel les données de trafic en temps réel ou les fichiers journaux de trafic comportent au moins des demandes de requête de nom de domaine provenant des terminaux et/ou des demandes de connexion HTTP provenant des terminaux pour accéder aux noms de domaine.

3. Procédé selon la revendication 2, **caractérisé en ce que** l'étape de prétraitement des données de trafic réseau d'origine pour obtenir les données de trafic réseau prétraitées comprend en outre :
le regroupement des données de trafic réseau d'origine par intervalles de temps ;
l'extraction de champs valides à partir des données de trafic réseau regroupées par intervalles de temps, dans lequel les champs valides comportent au moins trois champs clés d'horodatage, d'identifiant de terminal et de nom de domaine d'accès ; et
le nettoyage des données de trafic réseau contenant les champs valides et le filtrage des données redondantes et d'une liste blanche pour obtenir des séquences de journaux ayant chacune une structure de données <horodatage, identifiant de terminal, nom de domaine d'accès>.

4. Procédé selon la revendication 3, **caractérisé en ce que** l'étape de construction du graphe de relation d'accès aux terminaux sur la base des données de trafic réseau prétraitées comprend en outre :
l'extraction, à partir des données de trafic réseau prétraitées, d'informations sur les identifiants de terminaux identifiant les informations de terminaux et les noms de domaine accédés ou consultés par les terminaux dans les comportements de réseau de terminaux dans un intervalle de temps correspondant ;
l'agrégation, sur la base des informations extraites sur les identifiants de terminaux et les noms de domaine accédés ou interrogés par les terminaux, d'informations d'identifiants de terminaux dans le même intervalle de temps par rapport à un nom de domaine d'intérêt pour former une structure d'agrégation <identifiant d'heure, nom de domaine, ensemble d'identifiants de terminaux pour accéder au nom de domaine> ; et
la construction et la mise à jour, à partir de la structure d'agrégation, d'un graphe de relation d'adjacence entre un nœud avec le nom de domaine et une liste d'identifiants de terminaux qui accèdent au nom de domaine pour obtenir le graphe de relation d'accès aux terminaux.

5. Procédé selon la revendication 4, **caractérisé en ce que** l'étape de construction des listes liées sur la base des relations d'adjacence dans le graphe de relation d'accès aux terminaux et de tri des listes liées comprend en outre :
la construction, sur la base du graphe de relation d'accès aux terminaux, de chaque nœud de nom de domaine et de ses nœuds adjacents correspondants en tant que liste liée, dans lequel le nœud <identifiant d'heure#nom de domaine d'accès> dans la liste liée sert de nœud principal de la liste liée, et les nœuds suivant le nœud principal servent de nœuds d'identifiants de terminaux, et dans lequel les nœuds d'identifiants de terminaux sont triés dans un ordre décroissant en matière de degrés des nœuds d'identifiants de terminaux dans l'ensemble du graphe de relation ; et
le tri de différentes listes liées dans un ordre séquentiel, dans lequel une règle de tri est conçue pour trier les nœuds de nom de domaine d'accès dans un ordre décroissant en matière de degrés des nœuds de nom de domaine d'accès dans l'ensemble du graphe de relation.

6. Procédé selon la revendication 5, **caractérisé en ce que** l'étape de construction de l'arborescence de modèle d'accès sur la base des listes liées triées comprend en outre :
l'ajout, sur la base des listes liées triées et en utilisant les nœuds d'identifiants de terminaux dans les listes liées comme nœuds d'arbre, d'informations de nom de domaine d'accès pour attribuer des informations des nœuds d'arbre pour construire l'arborescence de modèle d'accès.

7. Procédé selon la revendication 6, **caractérisé en ce que** l'étape de filtrage de la combinaison de nœuds candidats pour obtenir un résultat de détection de nœuds de réseau de zombies sur la base d'une règle de filtrage prédéfinie comprend en outre :
le fait de déterminer s'il existe une relation d'inclusion entre des nœuds candidats dans la combinaison de nœuds candidats ;
la suppression, si la détermination est positive, du nœud candidat inclus de la combinaison de nœuds candidats pour obtenir une combinaison de nœuds candidats filtrée en redondance ;
l'obtention, sur la base de la combinaison de nœuds candidats filtrée en redondance, du nombre d'éléments dans l'ensemble d'identifiants de terminaux et du nombre d'éléments dans l'ensemble de noms de domaine d'accès à chaque nœud candidat ; et
la conservation d'un ensemble de nœuds candidats lorsque le nombre d'éléments dans l'ensemble d'identifiants de terminaux est supérieur à un seuil prédéfini de nombre d'identifiants de terminaux et le nombre d'éléments dans l'ensemble de noms de domaines d'accès est supérieur à un seuil prédéfini de nombre de noms de domaines d'accès de manière à obtenir les nœuds de réseau de zombies.

8. Procédé selon l'une quelconque des revendications 1 à 7, comprenant en outre :
l'envoi de noms de domaine suspects dans le résultat de détection à un système de détection de noms de domaine malveillants, qui évalue les noms de domaine suspects pour optimiser le résultat de détection (S105).

9. Procédé selon l'une quelconque des revendications 1 à 8, comprenant en outre :
le rapport du résultat de détection à un système de surveillance, qui affiche le résultat de détection et/ou réalise, en fonction du résultat de détection, des opérations de gestion et de commande correspondantes sur des terminaux suspectés d'être infectés par un virus de bot (S106).

10. Système d'accès au réseau, **caractérisé en ce qu'**il comprend : un système de détection de réseaux de zombies ; et un système de détection de noms de domaine malveillants, un système de surveillance et un serveur DNS, chacun étant connecté pour pouvoir communiquer avec le système de détection de réseaux de zombies, dans lequel le système de détection de réseaux de zombies est en outre connecté à un certain nombre de terminaux d'accès ;
dans lequel le serveur DNS est configuré pour fournir des services d'accès par nom de domaine aux terminaux d'accès ;
dans lequel le système de détection de noms de domaine malveillants est configuré pour recevoir un nom de domaine suspect dans le résultat de détection envoyé par le système de détection de réseaux de zombies, et évaluer le nom de domaine suspect pour optimiser le résultat de détection ; et
dans lequel le système de surveillance est configuré pour recevoir le résultat de détection rapporté par le système de détection de réseaux de zombies de manière à afficher le résultat de détection et/ou réaliser, en fonction du résultat de détection, des opérations de gestion et de commande correspondantes sur des terminaux suspectés d'être infectés par un virus de bot,
dans lequel le système de détection de réseaux de zombies est configuré pour :
acquérir des données de trafic réseau d'origine dans un réseau surveillé, et prétraiter les données de trafic réseau d'origine pour obtenir des données de trafic réseau prétraitées (S101) ;
construire, sur la base des données de trafic réseau prétraitées, un graphe de relation d'accès aux terminaux (S102) ; et
extraire, à partir du graphe de relation d'accès aux terminaux, une liste d'identifiants de terminaux accédant à une pluralité de noms de domaine identiques pour obtenir une combinaison de nœuds candidats, et filtrer, sur la base d'une règle de filtrage prédéfinie, la combinaison de nœuds candidats pour obtenir un résultat de détection de nœuds de réseau de zombies (S103),
**caractérisé en ce que** :
extraire la liste d'identifiants des terminaux accédant à la pluralité de noms de domaine identiques à partir du graphe de relation d'accès aux terminaux pour obtenir la combinaison de nœuds candidats comprend en outre que le système de détection de réseaux de zombies est en outre configuré pour :
construire, sur la base des relations d'adjacence dans le graphe de relation d'accès aux terminaux, des listes liées et trier les listes liées ;
construire, à partir des listes liées triées, une arborescence de modèle d'accès ; et
extraire un ensemble de nœuds sur chaque chemin de l'arborescence de modèles d'accès en tant qu'ensemble d'identifiants de terminaux, et une liste <identifiant d'heure#nom de domaine> de nœuds finaux sur le chemin en tant qu'ensemble de noms de domaines d'accès accessibles par des identifiants de terminaux correspondants collectivement de manière à obtenir la liste d'identifiants de terminaux accédant à une pluralité de noms de domaines identiques en tant que combinaison de nœuds candidats.

11. Système de détection de réseaux de zombies, **caractérisé en ce qu'**il comprend : une mémoire, un processeur et un programme de détection de réseaux de zombies stocké sur la mémoire et exécutable sur le processeur, dans lequel le programme de détection de réseaux de zombies, lorsqu'il est exécuté par le processeur, met en œuvre des étapes du procédé de détection de réseaux de zombies selon l'une quelconque des revendications 1 à 9.

12. Support de stockage lisible par ordinateur sur lequel sont stockées des instructions informatiques qui, lorsqu'elles sont exécutées par un processeur, mettent en œuvre le procédé selon l'une quelconque des revendications 1 à 9.
